# EUROPÄISCHE PATENTSCHRIFT

(11) **EP 2 993 453 B1**
(45) Veröffentlichungstag und Bekanntmachung des Hinweises auf die Patenterteilung: **22.02.2017**
(21) Anmeldenummer: 15181394.6
(22) Anmeldetag: 18.08.2015
(51) Int. Cl.: G01L 1/26, G01L 9/00, G01L 1/18, G01L 1/22, G01L 19/04

(54) **SENSORELEMENT**
SENSOR ELEMENT
ÉLEMENT DE CAPTEUR

(30) Priorität: 05.09.2014 AT 506122014
(43) Veröffentlichungstag der Anmeldung: 09.03.2016
(73) Patentinhaber: Piezocryst Advanced Sensorics GmbH, 8020 Graz (AT)
(72) Erfinder: KROEGER, Dietmar, 8010 GRAZ (AT); SCHMID, Peter, 1050 WIEN (AT); SCHMID, Ulrich, 1140 WIEN (AT); SCHRICKER, Alexander, 8046 GRAZ (AT); ZARFL, Christof, 8561 Hitzendorf (AT)
(74) Vertreter: Babeluk, Michael

(56) Entgegenhaltungen:
- WO-A1-2007/101426
- US-A1- 2007 245 829
- US-A1- 2010 123 744
- H. SCHMID-ENGEL ET AL: "Strain sensitive Pt-SiO2 nano-cermet thin films for high temperature pressure and force sensors", SENSORS AND ACTUATORS A., Bd. 206, 1. Februar 2014 (2014-02-01), Seiten 17-21, XP055237101, CH ISSN: 0924-4247, DOI: 10.1016/j.sna.2013.11.021
- R. LUTHIER: "Magnetron sputtered TiAlON composite thin films. II. Optical and electrical properties", JOURNAL OF VACUUM SCIENCE AND TECHNOLOGY: PART A., Bd. 9, Nr. 1, 1. Januar 1991 (1991-01-01), Seite 110, XP055237068, MELVILLE, NY., US ISSN: 0734-2101, DOI: 10.1116/1.577109

## Beschreibung

Die Erfindung betrifft ein Sensorelement mit einem Substrat das ein bevorzugt mittels Dünnschichttechnik aufgetragenes, dehnungssensitives Element aufweist, welches zur Messung der Verformung des Substrats bei Druckbeaufschlagung oder Krafteinleitung dient.

Um beispielsweise statische Drücke zu messen, nutzen gängige, meist Membranbasierte Sensorkonzepte piezoresistive Verfahren oder sog. Dehnmessstreifen (DMS), um lokal mechanische Dehnungen hochpräzise erfassen zu können. Für Hochtemperaturanwendungen (bis 700°C) sind jedoch gängige DMS Materialien (wie z.B. CrNi) nicht anwendbar, weil sie ihre elektro-mechanischen Eigenschaften nach der Hochtemperaturbelastung irreversibel verändern bzw. eine starke Oxidationsneigung zeigen. Metallische Materialien mit hohem Schmelzpunkt, wie z.B. Pt (siehe "A robust pressure sensor for harsh environmental applications", S. Fricke, A. Friedberger, H. Seidel, U. Schmid, Sensors and Actuators A: Physical, Volume 184, September 2012, Pages 16-21), können prinzipiell bis den in den angegebenen Temperaturbereich eingesetzt werden, weisen jedoch einen sehr hohen Temperaturkoeffizienten des elektrischen Widerstandes (TCR) auf, was eine höchstpräzise Temperaturmessung am Sensorelement erfordert, die über den gesamten Temperaturbereich technisch kaum realisierbar ist.

Ziel ist somit die Entwicklung von Dünnschichtsystemen mit hoher Temperaturstabilität, einem TCR nahe Null und einem möglichst hohen K-Faktor, welcher ein Maß für die Änderung des elektrischen Widerstands bei mechanischer Dehnung darstellt.

Ni:a-C:H Dünnschichten erfüllen die beiden letztgenannten Anforderungen, sind jedoch nur bis ca. 300°C stabil. Derartige Schichten werden beispielsweise in "Pressure sensitivity of piezoresistive nickel-carbon Ni:a-C:H thin films", Steffen Uhlig, Hanna Schmid-Engel, Tobias Speicher, Günter Schultes, Sensors and Actuators A: Physical, Volume 193, 15 April 2013, Pages 129-135, beschrieben.

Aus der EP 1 991 849 B1 ist in diesem Zusammenhang ein Hochtemperatur-Drucksensorelement zur Messung von Drücken auch oberhalb von 400°C bekannt geworden. Das Hochtemperatur-Drucksensorelement bzw. der Drucksensor besteht aus einem Substrat, in dem ein Innenraum ausgestaltet ist. Weiterhin ist eine verformbare Membran vorgesehen, die im Betrieb den Innenraum vom Außenraum trennt und sich bei einer Änderung des äußeren Druckes gegenüber dem Druck im Innenraum verformt. Auf der verformbaren Membran ist eine Anordnung bzw. Struktur von Dehnungsmessstreifen angeordnet, die ein Dehnungsmesselement zur Messung der Verformung der Membran bilden. Dabei sind die Membran, das Substrat und das Dehnungsmesselement aus ein und demselben hochtemperaturstabilen Material gebildet, vorzugsweise einer Legierung wie beispielsweise eine Nickelbasislegierung. Zwischen dem Dehnungsmesselement und der Membran ist eine elektrische Isolierungsschicht angeordnet, die aus BN, MgO oder Al₂O₃ besteht. Weiters kann das Dehnungsmesselement eine Passivierungsschicht aufweisen, die aus dem Material der Isolierungsschicht besteht. Nachteilig ist, dass die genannten metallischen Legierungen einen relativ hohen TCR Wert aufweisen.

Aus "Strain sensitive Pt-SiO2 nano-cermet thin films for high temperature pressure and force sensors", H. Schmid-Engel, S. Uhlig, U. Werner, G. Schultes, Sensors and Actuators A: Physical, Volume 206, 1 February 2014, Pages 17-21, sind schließlich Dünnschicht-Hochtemperatur-Dehnungsmessstreifen, beispielsweise aus Pt-SiO₂ bekannt, die einen hohen K-Faktor und niedrige Temperaturkoeffizienten des Widerstandes (TCR) aufweisen und in einem Temperaturbereich bis 300°C eingesetzt werden können.

Aufgabe der Erfindung ist es, ein Sensorelement mit einem Substrat das ein dehnungssensitives Element aufweist, derart weiterzubilden, dass eine hohe Temperaturstabilität, ein TCR nahe Null und ein möglichst hoher K-Faktor auch im Hochtemperaturbereich realisiert werden kann.

Diese Aufgabe wird erfindungsgemäß dadurch gelöst, dass das dehnungssensitive Element aus XAlO_{y}N_{1-y} besteht, wobei X ein Metall mit einer hohen Schmelztemperatur im Bereich größer 1400°C ist und 0 < y < 0,4 gilt.

Bevorzugt besteht das dehnungssensitive Element aus einer Komposit-Schicht, die im PVD Verfahren (beispielsweise Sputter- oder Aufdampfverfahren) oder CVD-Verfahren auf das Substrat aufgebracht wird, wobei das dehnungssensitive Element zumindest ein Metall X aus der Gruppe Ti, Ta und Pt enthält.

Es ist bekannt, dass XAlO_{y}N_{1-y} -Schichten eine hohe Oxidationsresistenz aufweisen. Es hat sich nun gezeigt, dass auch die elektro-mechanischen Kenngrößen (K-Faktor, TCR) im Hinblick auf die Verwendung als DMS hervorragende Werte aufweisen. Mit Hilfe das zusätzlichen Sauerstoffanteils wird ein weiterer Freiheitsgrad geschaffen, um die elektro-mechanischen Kenngrößen gezielt einstellen zu können.

Erfindungsgemäß ist der Anteil an Aluminium im dehnungssensitiven Element, der mit Stickstoff und Sauerstoff eine dielektrische Verbindung eingeht, zum Anteil der metallischen Komponente, derart gewichtet ist, dass der TCR des dehnungssensitiven Elements minimale Werte, vorzugsweise annähernd 0, annimmt.

Es wird somit beim Schichtaufbau zusätzlich zum Aluminiumanteil, eine metallische Komponente hinzugefügt. Die Komposit-Schicht wird bevorzugt durch ein Sputterverfahren in Dünnschichttechnik abgeschieden, wobei es durch die Kombination aus metallischem Anteil (mit TCR >0) und dielektrischer Matrix (mit TCR<0) in einer Schicht möglich ist den TCR auf annähernd Null einzustellen und zusätzlich einen hohen K-Faktor (>2) zu erreichen.

Für den Einsatz als Sensor über einen längeren Zeitraum bei extremen Temperaturbelastungen ist es wünschenswert, eine Dünnschicht in eine definierte Atmosphäre einzubringen, die garantiert, dass bei hohen Temperaturen keine Umwandlungsprozesse in der Schicht einsetzen.

Das dehnungssensitive Element ist somit bevorzugt in einer geschlossenen Sensoratmosphäre mit einem definierten Sauerstoffanteil angeordnet, vorzugsweise in einem abgedichteten Sensorgehäuse. Durch das Einbringen der XAlO_{y}N_{1-y}-Dünnschicht in eine geschlossene Sensoratmosphäre, deren Umgebung beispielsweise durch einen Nickelbasiswerkstoff (beispielsweise Haynes 230) dominiert ist, kann das Hochtemperaturverhalten der Schicht auf sehr stabilem Niveau gehalten werden. Die Nickelbasislegierung bindet bei hohen Temperaturen den Restsauerstoff in der Sensoratmosphäre, wobei durch den abgedichteten Aufbau das Nachströmen von Luftsauerstoff verhindert wird. Dadurch befindet sich ein definierter Sauerstoffanteil in der Sensoratmosphäre, das Oxidationsverhalten der Dünnschicht kann durch das Verhältnis der oxydischen und nitridischen Anteile gut kontrolliert werden. Somit können Veränderungen der Schicht über einen langen Zeitraum minimiert werden.

Erfindungsgemäß kann das dehnungssensitive Element eine Passivierungsschicht, vorzugsweise aus Al₂0₃ oder AlN, aufweisen. Durch die Applizierung einer hochtemperaturstabilen Passivierung kann die Langzeitstabilität weiter erhöht werden.

Die Erfindung wird im Folgenden anhand von Zeichnungen näher erläutert. Es zeigen:
- Fig. 1: ein erfindungsgemäßes Sensorelement in einer Schnittdarstellung;
- Fig. 2: ein erfindungsgemäßes Sensorelement in Draufsicht (ohne Passivierungsschicht);
- Fig. 3: eine Ausführungsvariante des erfindungsgemäßen Sensorelementes im Gehäuse eines Drucksensors;
- Fig. 4: ein Diagramm des K-Faktors für ein dehnungssensitives Element aus TiA10_{0,2}N_{0,8} im Temperaturbereich bis 350°C; sowie
- Fig. 5: ein TCR-Diagramm für TiAlO_{0,2}N_{0,8} im Differenztemperaturbereich bis 350°C

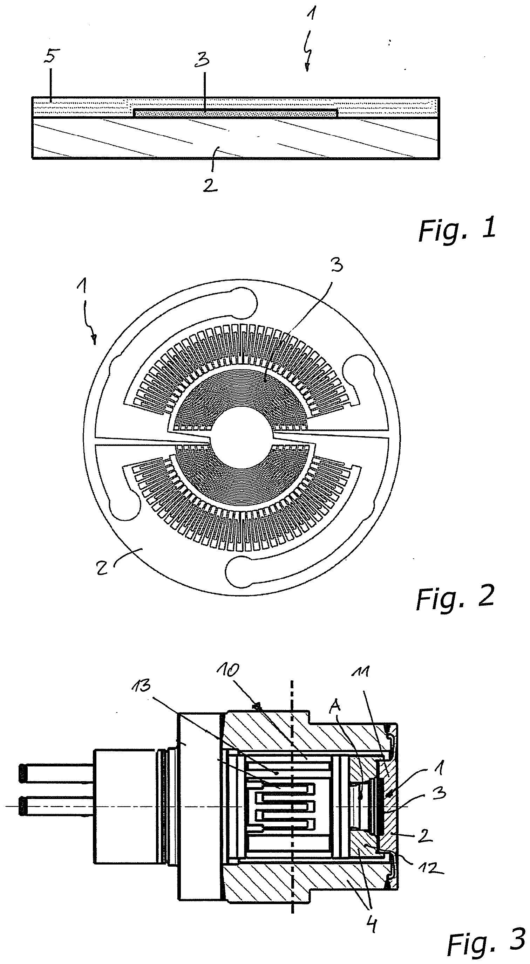

In den Fig. 1 und Fig. 2 ist ein erfindungsgemäßes Sensorelement 1 mit einem Substrat 2 dargestellt, das ein mittels Dünnschichttechnik aufgetragenes, dehnungssensitives Element 3 aufweist, welches zur Messung der Verformung des Substrats 2 bei Druckbeaufschlagung oder Krafteinleitung dient. Das dehnungssensitive Element 3 besteht aus XAlO_{y}N_{1-y}, wobei X ein Metall mit einer hohen Schmelztemperatur, beispielsweise Titan, ist. Der Faktor y liegt in einem Bereich zwischen 0 und 0,4. Das dehnungssensitive Element 3 und der anschließende Substratbereich weisen eine Passivierungsschicht 5, beispielsweise aus Al₂0₃, auf.

In der Draufsicht gemäß Fig. 2 wurde die Passivierungsschicht weggelassen, so dass das dehnungssensitive Element 3 als mäandrierende DMS samt Anschlusskontaktierung sichtbar wird.

In der Ausführungsvariante gemäß Fig. 3 liegt das erfindungsgemäße Sensorelement 1 in einer geschlossenen Sensoratmosphäre A mit einem definierten Sauerstoffanteil in einem abgedichteten Sensorgehäuse 4 eines Drucksensors 10 vor. Als Substrat 2 dient die Membran 11 des Drucksensors 10, an deren Innenseite das dehnungssensitive Element 3 als Dünnschicht aufgebracht ist. das Gehäuse 4 bzw. die unmittelbare Umgebung für das dehnungssensitive Element 3 besteht zumindest teilweise aus Ni-Basiswerkstoff. Im dargestellten Beispiel kann die Membran 11 und das auf die piezoelektrischen Elemente 13 wirkende Druckübertragungselement 12 aus Ni-Basiswerkstoff bestehen.

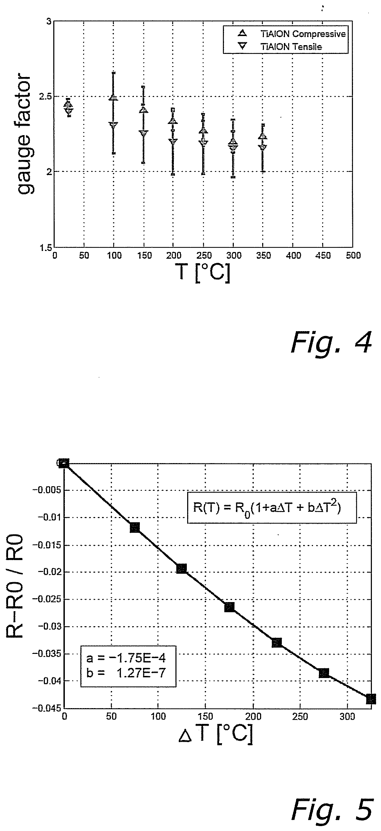

In den Fig. 4 und Fig. 5 sind für ein dehnungssensitives Element aus TiAlO_{0,2}N_{0,8} der K-Faktor (gauge factor) und der TCR ((R - R0)/R0) jeweils in einem Differenztemperaturbereich zwischen 0°C und 350°C - bezogen auf eine Bezugstemperatur - dargestellt, wobei die Bezugstemperatur hier die Raumtemperatur ist.

## Patentansprüche

1. Sensorelement (1) mit einem Substrat (2) das ein bevorzugt mittels Dünnschichttechnik aufgetragenes, dehnungssensitives Element (3) aufweist, welches zur Messung der Verformung des Substrats (2) bei Druckbeaufschlagung oder Krafteinleitung dient, **dadurch gekennzeichnet, dass** das dehnungssensitive Element (3) aus XAlO_{y}N_{1-y} besteht, wobei X ein Metall mit einer hohen Schmelztemperatur im Bereich größer 1400°C ist und 0 < y < 0,4 gilt.

2. Sensorelement (1) nach Anspruch 1, **dadurch gekennzeichnet, dass** das dehnungssensitiven Element (3) aus einer Komposit-Schicht besteht, die im PVD-Verfahren, vorzugsweise Sputter- oder Aufdampfverfahren, oder im CVD-Verfahren auf das Substrat (2) aufbringbar ist.

3. Sensorelement (1) nach Anspruch 1 oder 2, **dadurch gekennzeichnet, dass** das dehnungssensitiven Element (3) zumindest ein Metall X aus der Gruppe Ti, Ta und Pt enthält.

4. Sensorelement (1) nach einem der Ansprüche 1 bis 3, **dadurch gekennzeichnet, dass** der Anteil an Aluminium im dehnungssensitiven Element (3), der mit Stickstoff und Sauerstoff eine dielektrische Verbindung eingeht, zum Anteil der metallischen Komponente, derart gewichtet ist, dass der TCR des dehnungssensitiven Elements (3) minimale Werte, vorzugsweise annähernd 0, annimmt.

5. Sensorelement (1) nach Anspruch 4, **dadurch gekennzeichnet, dass** der Titananteil in einem dehnungssensitiven Element (3) aus TiAlON zwischen 0,4 und 0,5 Gew% beträgt.

6. Sensorelement (1) nach einem der Ansprüche 1 bis 5, **dadurch gekennzeichnet, dass** das dehnungssensitiven Element (3) in einer geschlossenen Sensoratmosphäre mit einem definierten Sauerstoffanteil angeordnet ist, vorzugsweise in einem abgedichteten Sensorgehäuse (4).

7. Sensorelement (1) nach Anspruch 6, **dadurch gekennzeichnet, dass** das Sensorgehäuse (4) zumindest teilweise aus Ni-Basiswerkstoff besteht

8. Sensorelement (1) nach einem der Ansprüche 1 bis 7, **dadurch gekennzeichnet, dass** das Substrat (2), auf das das dehnungssensitive Element (3) aufgetragen ist, aus Ni-Basiswerkstoff, beispielsweise Haynes 230, aus Keramik oder einem piezoelektrischen Material besteht.

9. Sensorelement (1) nach einem der Ansprüche 1 bis 8, **dadurch gekennzeichnet, dass** das dehnungssensitive Element (3) eine Passivierungsschicht (5), vorzugsweise aus Al₂O₃ oder AlN, aufweist.

## Claims

1. A sensor element (1), comprising a substrate (2) having a strain-sensitive element (3) which is preferably applied by means of thin-film technology and is used for measuring the deformation of the substrate (2) when pressure is applied or a force is introduced, **characterised in that** the strain-sensitive element (3) consists of XAlO_{y}N_{1-y}, wherein X is a metal with a high melting temperature in the range of greater than 1400°C and 0 < y < 0.4 applies.

2. A sensor element (1) according to claim 1, **characterised in that** the strain-sensitive element (3) consists of a composite layer which can be applied to the substrate (2) by the PVD process, preferably sputtering or vapour-deposition process, or by the CVD process.

3. A sensor element (1) according to claim 1 or 2, **characterised in that** the strain-sensitive element (3) contains at least one metal X from the group of Ti, Ta and Pt.

4. A sensor element (1) according to one of the claims 1 to 3, **characterised in that** the fraction of aluminium in the strain-sensitive element (3), which enters into a dielectric connection with nitrogen and oxygen, to the fraction of the metallic component is weighted in such a way that TCR of the strain-sensitive element (3) assumes minimum values, preferably approximately 0.

5. A sensor element (1) according to claim 4, **characterised in that** the titanium fraction in a strain-sensitive element (3) made of TiAlON is between 0.4 and 0.5 percent by weight.

6. A sensor element (1) according to one of the claims 1 to 5, **characterised in that** the strain-sensitive element (3) is arranged in an enclosed sensor atmosphere with a defined oxygen fraction, preferably in a sealed sensor housing (4).

7. A sensor element (1) according to claim 6, **characterised in that** the sensor housing (4) consists at least partly of Ni base material.

8. A sensor element (1) according to one of the claims 1 to 7, **characterised in that** the substrate (2), to which the strain-sensitive element (3) is applied, consists of Ni base material such as Haynes 230, a ceramic or a piezoelectric material.

9. A sensor element (1) according to one of the claims 1 to 8, **characterised in that** the strain-sensitive element (3) comprises a passivation layer (5), preferably made of Al₂0₃ or AIN.

## Revendications

1. Elément capteur (1) comprenant un substrat (2) qui comporte un élément sensible à extension (3), de préférence appliqué par la technique des couches minces et ayant pour fonction de mesurer la déformation du substrat (2) en cas de sollicitation en pression ou d'application d'une force,
**caractérisé en ce que**
l'élément sensible à l'extension (3) est réalisé en XAlO_{y}N_{1-y}, X représentant un métal ayant une température de fusion élevée située dans une plage supérieure à 1400°C, et y satisfaisant à la formule 0 < y < 0,4.

2. Elément capteur (1) conforme à la revendication 1,
**caractérisé en ce que**
l'élément sensible à l'extension (3) est constitué par une couche composite pouvant être appliquée sur le substrat (2) par un procédé PVD, de préférence un procédé de pulvérisation ou un procédé de vaporisation ou un procédé CVD.

3. Elément capteur (1) conforme à la revendication 1 ou 2,
**caractérisé en ce que**
l'élément sensible à l'extension (3) renferme au moins un métal X du groupe constitué par Ti, Ta et Pt.

4. Elément capteur (1) conforme à l'une des revendications 1 à 3,
**caractérisé en ce que**
la proportion d'aluminium dans l'élément sensible à l'extension (3) avec l'azote et l'oxygène donne une liaison diélectrique par rapport à la proportion de composants métalliques est évaluée de sorte que le coefficient thermique de TCR de l'élément sensible à l'extension (3) ait des valeurs minimum de préférence proches de 0.

5. Elément capteur (1) conforme à la revendication 4,
**caractérisé en ce que**
la proportion de titane dans un élément sensible à l'extension (3) en TiAlON est comprise entre 0,4 et 0,5 % en poids.

6. Elément capteur (1) conforme à l'une des revendications 1 à 5,
**caractérisé en ce que**
l'élément sensible à l'extension (3) est placé dans une atmosphère de capteur fermée ayant une proportion en oxygène définie, de préférence dans un boîtier de capteur étanche (4).

7. Elément capteur (1) conforme à la revendication 6,
**caractérisé en ce que**
le boîtier de capteur (4) est au moins partiellement constitué d'un matériau à base de nickel.

8. Elément capteur (1) conforme à l'une des revendications 1 à 7,
**caractérisé en ce que**
le substrat (2) sur lequel est appliqué l'élément sensible à l'extension (3) est réalisé en un matériau à base de nickel, par exemple en alliage Haynes 230, en céramique ou en un matériau piézoélectrique.

9. Elément capteur (1) conforme à l'une des revendications 1 à 8,
**caractérisé en ce que**
l'élément sensible à l'extension (3) comprend une couche de passivation (5), de préférence en Al₂O₃ ou en AlN.
